# EUROPEAN PATENT APPLICATION

(11) **EP 4 800 633 A1**
(43) Date of publication of application: **02.09.2026**
(21) Application number: 24882038.3
(22) Date of filing: 09.09.2024
(51) Int. Cl.: G06Q 50/16, E05B 49/00, G06Q 50/163

(54) **CONTRACTOR MANAGEMENT SYSTEM**

(30) Priority: 24.10.2023 JP 2023182763; 06.11.2023 JP 2023189206; 09.04.2024 JP 2024062755
(71) Applicant: Optex Co., Ltd., Otsu-shi, Shiga 520-0101 (JP)
(72) Inventor: IRIE, Kosuke, Otsu-shi, Shiga 520-0101 (JP); IKEDA, Takayasu, Otsu-shi, Shiga 520-0101 (JP)
(74) Representative: Müller Hoffmann & Partner
(86) International application number: PCT/JP2024/032151
(87) International publication number: WO 2025/088921

(57) **Abstract**

In order to provide a contractor management system in which, while security in a facility provided with a security system, such as an apartment building, is ensured, a contractor can smoothly execute a task in the apartment building, the contractor management system includes: a door sensor device 100 including a human detection sensor 2 that detects a person who has entered a predetermined area of a door D of the facility, and a door control unit that controls locking and unlocking, or opening and closing of the door D; a task attribute information acquisition unit that acquires task attribute information indicating an attribute related to a task of the person detected by the human detection sensor 2; an orderer authentication information acquisition unit that acquires orderer authentication information indicating task authentication to the contractor from the orderer; and a determination unit that determines whether or not the person detected by the human detection sensor 2 is an authenticated contractor by comparing the task attribute information and the orderer authentication information, in which when the determination unit determines that the person detected by the human detection sensor 2 is the authenticated contractor, the door control unit causes the door D to be an unlocked or opened state.

## Description

### Technical Field

The present invention relates to a management system or the like of a contractor who enters a facility provided with a security system, such as an apartment building and performs a task such as unattended delivery or cleaning.

### Background Art

Recently, unattended delivery in which a package is placed in front of a residence without being handed over to a resident (orderer) is becoming popular.

However, in order to perform unattended delivery in a facility such as an apartment building having a security system, it is necessary for a contractor to enter the facility even when a resident is absent. Therefore, it is necessary to give an entrance authorization to the contractor, but if the authorization is loosened, a security problem may occur, whereas if the authorization is tightened, a problem that unattended delivery cannot be efficiently performed may occur.

In addition, in recent years, there is a situation where a contractor who has entered an apartment building gets lost inside a large building to wander around, and has stayed for a long time, causing anxiety of residents.

Similar problems are common not only for unattended delivery but also for tasks performed in a facility such as an apartment building, such as cleaning and maintenance and inspection.

### Citation List

### Patent Literature

Patent Literature 1: JP 6714283 B1

### Summary of Invention

### Technical Problem

The present invention has been made to solve the above-described problems, and has been made to provide a contractor management system that enables a contractor to smoothly execute a task in a facility while security of the facility is ensured.

Note that the contractor herein includes not only a corporation and an individual that have received a task request from an orderer, but also an entrustee (corporation or individual) who has been entrusted by the corporation or the individual.

### Solution to Problem

The present invention has the following configuration.
[1] A contractor management system for managing a contractor who has received, from an orderer, a request for a task in a facility provided with a security system, such as an apartment building, the contractor management system including:
   a door sensor device including a human detection sensor that detects a person who has entered a predetermined area of a door of the facility, and a door control unit that controls locking and unlocking, or opening and closing of the door;
   a task attribute information acquisition unit that acquires task attribute information indicating an attribute related to a task of the person detected by the human detection sensor;
   an orderer authentication information acquisition unit that acquires orderer authentication information indicating task authentication to the contractor from the orderer; and
   a determination unit that determines whether or not the person detected by the human detection sensor is an authenticated contractor by comparing the task attribute information and the orderer authentication information, in which
   when the determination unit determines that the person detected by the human detection sensor is the authenticated contractor, the door control unit causes the door to be an unlocked or opened state.
[2] The contractor management system according to [1], in which the task attribute information acquisition unit acquires the task attribute information of the person by communicating with a mobile terminal possessed by the person.
   With such a configuration, the task attribute information acquisition unit can acquire the task attribute information of the person detected by the human detection sensor, that is, the person in the predetermined area of the door, by local communication with the mobile terminal of the person. Therefore, it is possible to reliably acquire information even in a place where a communication environment is poor as compared with communication via the Internet, and it is possible to establish a robust system in which information leakage hardly occurs. In addition, since a type and format of an attribute necessary for authentication can be easily changed by an application or the like of the mobile terminal, flexible operation is also possible.
[3] The contractor management system according to [1] or [2], in which different authentication can be set for each task.
   With such a configuration, reuse of authentication in a plurality of tasks can be prevented, and security can be improved. For example, as a specific example, the orderer can issue a one-time passcode as authentication.
[4] The contractor management system according to any one of [1] to [3], further including a stay recording unit that uses a detection signal of the human detection sensor to acquire and record a stay time from when the authenticated contractor enters the facility until the authenticated contractor leaves the facility.
   With such a configuration, by recording (logging) the stay time of the contractor, it is possible not only to accurately perform a task evaluation and the like of the contractor, but also to contribute to suppressing crime of the contractor.
[5] The contractor management system according to [4], in which
   a second human detection sensor is provided at each of a plurality of places in the facility, and
   the stay recording unit specifies and records a movement route of the contractor in the facility by a detection signal from each second human detection sensor.
   With such a configuration, by recording (logging) the movement route of the contractor in the facility, it is possible not only to accurately perform a task evaluation and the like of the contractor, but also to contribute to suppressing crime of the contractor.
[6] The contractor management system according to [4] or [5], further including a stay information transmission unit that transmits stay information of the contractor recorded by the stay recording unit to the orderer.
   With such a configuration, the orderer such as a resident and a manager of the facility can know the stay information such as the stay time and the movement route of the contractor in the facility, so that it is possible to give the orderer a sense of security, a sense of trust, and the like.
[7] The contractor management system according to any one of [1] to [6], further including a task execution information transmission unit that transmits, to the contractor, task execution information that is information for executing the task at the facility when the person is the authenticated contractor.
   With such a configuration, by indicating, for example, an unattended delivery location or the like in the facility as the task execution information, the contractor can perform unattended delivery without getting lost even in the facility where the contractor visits for the first time, which can help smooth task execution of the contractor.
[8] The contractor management system according to any one of [1] to [7], in which the task attribute information acquisition unit and the determination unit are attached to the door sensor device.

With such a configuration, the contractor authentication at the time of entering the facility can be performed by local communication not via a server device or the like, so that certainty and reliability of an operation can be enhanced.

### Advantageous Effects of Invention

According to the present invention, the following effects can be obtained.

By authentication of an orderer, a contractor who has received a request for a task from the orderer can enter a facility, so that security can be ensured.

Since it is determined whether the contractor is an authenticated person immediately before the contractor enters the facility, that is, at a time point when the contractor is detected by a human detection sensor, and a door is unlocked or opened (hereinafter, also referred to as a non-locked state), a non-locked time of the door can be minimized, and security can also be ensured in this respect.

The contractor can enter the facility without any trouble when entering the facility, and can smoothly execute the task.

### Brief Description of Drawings

FIG. 1 is a schematic perspective view illustrating a configuration of a contractor management system according to an embodiment of the present invention.
FIG. 2 is a schematic overall diagram illustrating the configuration of the contractor management system of the embodiment.
FIG. 3 is a functional block diagram of the contractor management system of the embodiment.
FIG. 4 is a flowchart illustrating an operation of the contractor management system of the embodiment.
FIG. 5 is a flowchart illustrating the operation of the contractor management system of the embodiment.
FIG. 6 is a flowchart illustrating the operation of the contractor management system of the embodiment.
FIG. 7 is a flowchart illustrating the operation of the contractor management system of the embodiment.
FIG. 8 is a functional block diagram of a contractor management system according to another embodiment of the present invention.
FIG. 9 is a floor plan of an apartment building according to still another embodiment of the present invention.
FIG. 10 is a functional block diagram of a contractor management system according to another embodiment of the present invention.
FIG. 11 is a functional block diagram of a contractor management system according to another embodiment of the present invention.

### Description of Embodiments

An embodiment of a contractor management system according to the present invention will be described with reference to the drawings.

### [First embodiment]

### 1. System overview

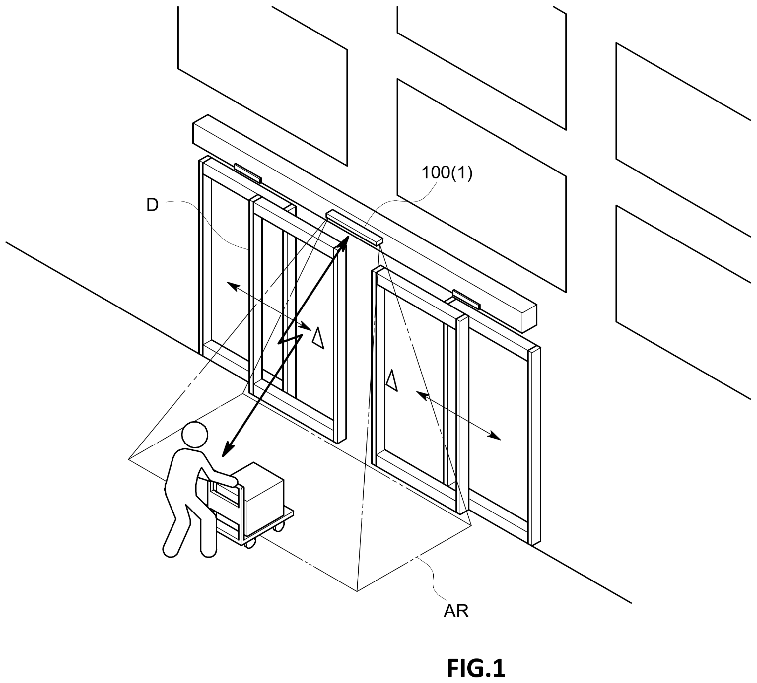

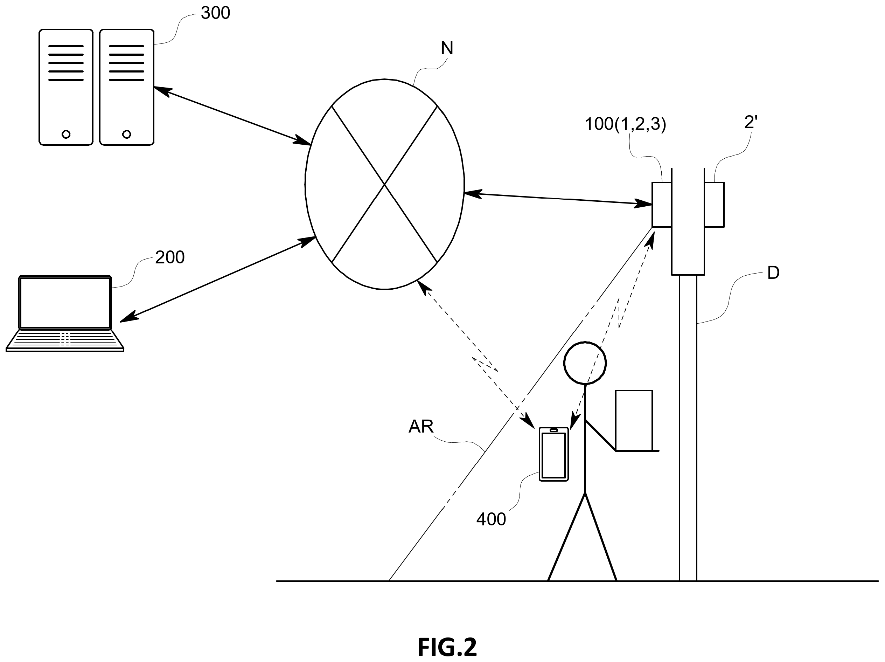

This contractor management system is for managing a contractor who enters an apartment building where a plurality of families and individuals live, such as an apartment and performs an unattended delivery task. In the present embodiment, as illustrated in FIG. 1, FIG. 2, and the like, a door sensor device 100 attached near an entrance door (here, an automatic door) D of the apartment building is used.

Note that, in FIG. 2, reference sign N denotes a communication network such as the Internet, reference sign 200 denotes an orderer side terminal device such as a personal computer or a mobile device used by a resident of the apartment building, that is, an orderer who orders unattended delivery of an item, reference sign 300 denotes an order receiver side server device used by an item order receiver such as an online shop or the contractor who performs unattended delivery, and reference sign 400 denotes a mobile terminal used by a delivery person (hereinafter, also referred to as a task executor) who actually performs unattended delivery.

### 2. System configuration

### 2-1. Door sensor device 100

As illustrated in FIGS. 1 to 3, the door sensor device 100 detects a person who has entered a detection region AR set in the vicinity of an outside of a doorway area to control opening and closing of the door D, and includes a housing 1, and a human detection sensor 2 and an information processing device 3 accommodated in the housing 1.

### 2-1-1. Housing 1

The housing 1 is provided with an opening for the human detection sensor on a lower side, and is attached to a transom, for example.

### 2-1-2. Human detection sensor 2

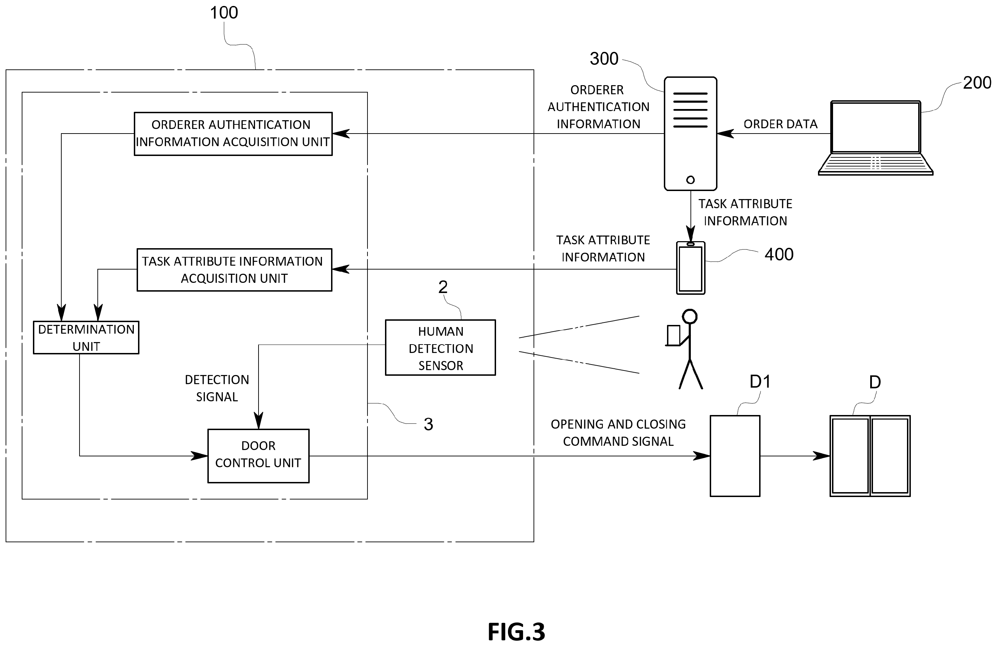

As illustrated in FIG. 3 and the like, the human detection sensor 2 detects whether or not a person has entered the detection region AR and outputs a detection signal indicating the detection. As the human detection sensor, specifically, various types of sensors such as a passive infrared sensor, an active infrared sensor, a radar sensor using a microwave or a millimeter wave, and a camera sensor using an imaging element can be used.

### 2-1-3. Information processing device 3

The information processing device 3 is a so-called computer including a CPU, a memory, an I/O interface, a communication interface, and the like, and is configured to be able to communicate with an external device via the communication network N, Bluetooth, or the like as illustrated in FIGS. 2 and 3.

In addition, the information processing device 3 exerts a function as a door control unit by cooperation of the CPU and peripheral devices according to a predetermined program stored in the memory. The door control unit outputs an opening and closing command signal to an opening and closing drive device D1 of the automatic door D on the basis of the detection signal output from the human detection sensor.

Furthermore, in the present embodiment, as illustrated in FIG. 3, the information processing device 3 is configured to exert a function as a task attribute information acquisition unit that acquires task attribute information that is attribute information related to a task of a person detected by the human detection sensor 2, an orderer authentication information acquisition unit that acquires orderer authentication information indicating that a contractor is authenticated by an orderer, and a determination unit that determines whether or not the person detected by the human detection sensor 2 is an authenticated contractor by collating the task attribute information with the orderer authentication information.

Configurations of these units will be described in detail below.

### 2-2. Task attribute information acquisition unit

Specifically, the task attribute information acquisition unit communicates with the mobile terminal held by a person detected by the human detection sensor 2, and acquires task attribute information recorded in advance in the mobile terminal.

For example, one-to-one local communication using Bluetooth is performed between the mobile terminal and the information processing device.

Note that the method for acquiring the task attribute information is not limited to the one-to-one local communication as described above, and for example, when the mobile terminal is accessed from the task attribute information acquisition unit and the task attribute information is requested, the mobile terminal may communicate with the server device and download the task attribute information.

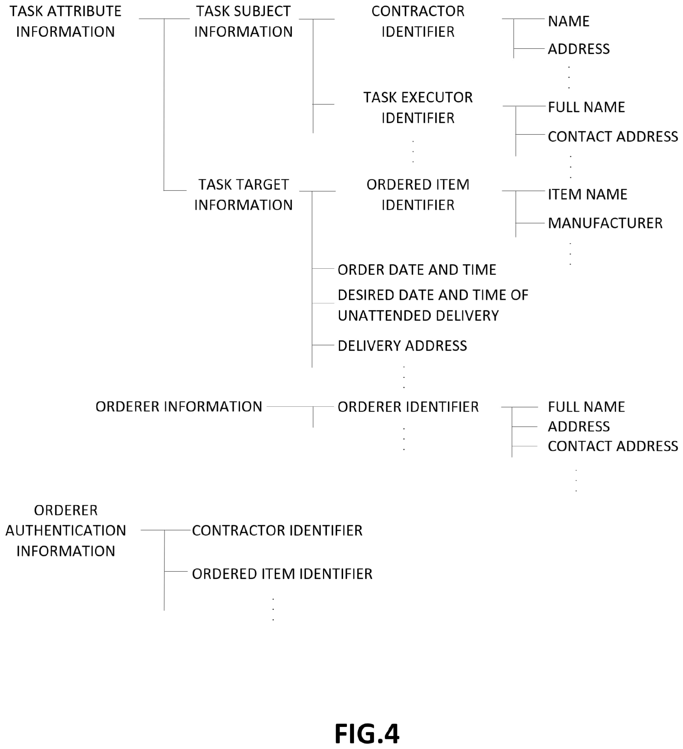

Here, the task attribute information is information that can specify task content to a certain extent, and here, as illustrated in FIG. 4, includes task subject information indicating who will perform unattended delivery, that is a subject of a task, such as a contractor name and personal identification information, and task target information indicating what to deliver, when, and where, that is a target of a task, such as an ordered item, an unattended delivery time, and an unattended delivery location.

The task subject information includes, for example, contractor information including a contractor identifier represented by a code or the like for identifying a contractor and a name, an address, and the like of the contractor associated therewith, and task executor information including a task executor identifier represented by a code or the like for specifying a person who actually performs an unattended delivery task (hereinafter referred to as a task executor), and a full name, a contact address, and the like of the task executor associated therewith.

The task target information includes ordered item information including an ordered item identifier represented by a code or the like for identifying an ordered item scheduled for unattended delivery and an item name, a manufacturer, and the like associated therewith, and order condition information including desired date and time of unattended delivery, an address of unattended delivery destination, and the like.

Furthermore, in the present embodiment, as illustrated in the figure, information about an orderer who has ordered a task is also included as the task attribute information. The orderer information includes accompanying information such as an orderer identifier represented by a code or the like for identifying an orderer and an orderer full name, an orderer address, and a contact address associated therewith.

### 2-3. Orderer authentication information acquisition unit

Specifically, the orderer authentication information acquisition unit communicates with the order receiver side server device used by an order receiver such as an online shop or a contractor who performs unattended delivery, via, for example, an Internet line to acquire the orderer authentication information indicating that the contractor is authenticated by an orderer. Note that the method for acquiring the orderer authentication information is not limited to the above example, and for example, the orderer authentication information may be acquired by communicating with the orderer side terminal device used for ordering by the orderer.

The orderer authentication information is, in short, information for proving that the contractor is a person who executes a task requested by the orderer, and is information indicating that the contractor is a contractor designated by the orderer at the time of ordering the unattended delivery task or explicitly or implicitly predetermined on an order receiver side.

The orderer authentication information needs to be comparable to at least a part of the task attribute information, and here, as illustrated in FIG. 4, for example, includes a contractor identifier common to the contractor identifier included in the task attribute information.

Note that an ordered item identifier may be used as the orderer authentication information, both the ordered item identifier and the contractor identifier may be included in order to increase accuracy, or other task attribute information may be combined.

### 2-4. Determination unit

The determination unit compares the task attribute information acquired by the task attribute information acquisition unit from a person detected by the human detection sensor 2 with the orderer authentication information acquired in advance by the orderer authentication acquisition unit, and determines whether the person detected by the human detection sensor 2 is a contractor authenticated by an orderer.

As described above, the determination unit compares the contractor identifier indicated in the orderer authentication information with the contractor identifier indicated in the task attribute information, determines that the person detected by the human detection sensor 2 is the contractor authenticated by the orderer when they match, and determines that the person is not the contractor authenticated by the orderer when they do not match.

### 2-5. Door control unit

As described above, the door control unit outputs the door opening and closing command signal on the basis of the detection signal output from the human detection sensor 2, but here, outputs the door opening and closing command signal on the basis of not only the detection signal but also a determination result of the determination unit as a parameter. That is, the door control unit transmits the opening and closing command signal for opening the door to the opening and closing drive device (not illustrated) of the door when, in a state where the human detection sensor detects a person, the determination unit determines that the detected person is an authenticated contractor.

### 3. Operation

### 3-1. Operation at time of receiving order

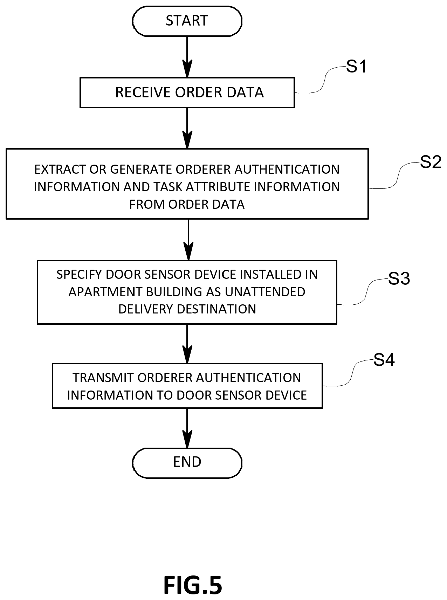

As illustrated in FIG. 5, when receiving an unattended delivery order of an item from the orderer side terminal device 200 (step S1), the order receiver side server device 300 extracts or generates the orderer authentication information and the task attribute information on the basis of an orderer, an ordered item, an unattended delivery destination, a designated unattended delivery contractor, and the like indicated in order data (step S2).

Next, the order receiver side server device 300 specifies the door sensor device 100 installed in an apartment building as the unattended delivery destination (step S3), and transmits the orderer authentication information to the specified door sensor device (step S4).

The orderer authentication acquisition unit of the door sensor device 100 receives the orderer authentication information and stores the orderer authentication information in a predetermined area of the memory.

### 3-2. Operation during unattended delivery

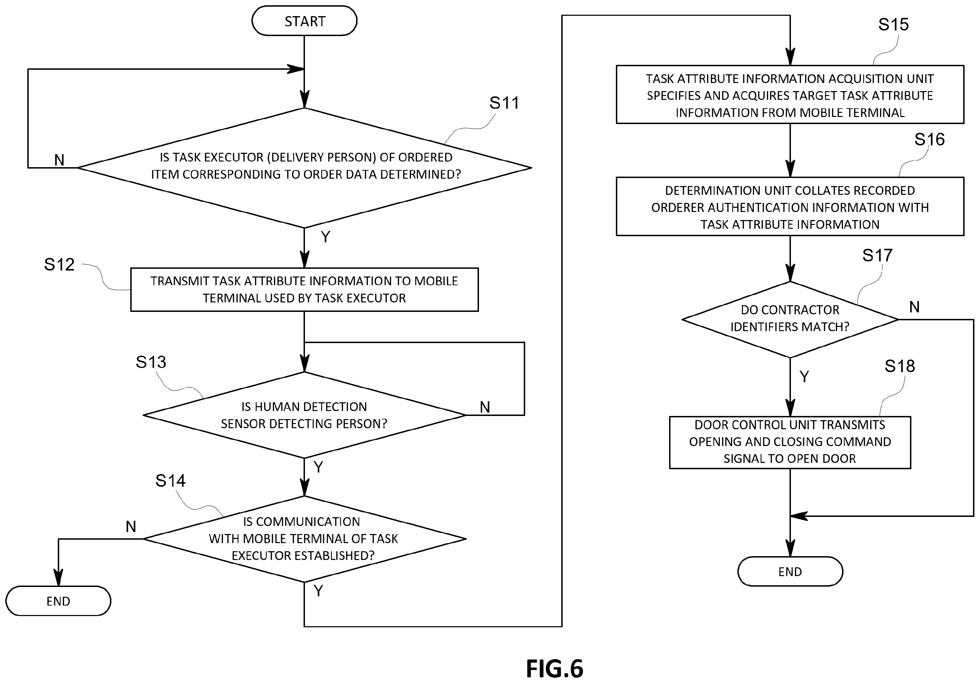

As illustrated in FIG. 6, when the task executor (delivery person) of the ordered item is determined (step S11), the order receiver side server device 300 transmits the task attribute information to the mobile terminal 400 used by the task executor before delivery of the ordered item, for example, before the task executor departs from a delivery center by a truck loaded with the item (step S12). The mobile terminal 400 receives the task attribute information and stores the task attribute information in a predetermined area of the memory. The transmission timing of the task attribute information is not limited thereto.

Next, when the task executor arrives at an entrance of the designated apartment building and enters the predetermined area AR, the human detection sensor 2 detects this and transmits a detection signal indicating this.

In a state of receiving the detection signal (step S13), the task attribute information acquisition unit attempts local communication with the mobile terminal 400 of the task executor (step S14).

When the local communication is established, the task attribute information acquisition unit acquires the task attribute information recorded in advance in the mobile terminal 400 (step S15). At this time, although there is a case where task attribute information of another apartment building is also stored in the mobile terminal 400, the task attribute information acquisition unit specifies and acquires target task attribute information on the basis of identification information such as an address of the apartment building included in each piece of task attribute information.

Next, the determination unit searches one or a plurality of pieces of orderer authentication information acquired in advance by the orderer authentication information acquisition unit, and determines whether or not there is orderer authentication information having a contractor identifier matching a contractor identifier included in the task attribute information, among them, that is, whether or not a contractor is authenticated by an orderer (steps S16 and S17).

When it is determined that the contractor is authenticated by the orderer, the door control unit transmits the opening and closing command signal to the opening and closing drive device D1 (step S18), and opens the door D.

### 3-3. Operation when unattended delivery is finished

When the door D is opened, the task executor of unattended delivery enters the apartment building, goes to a preset unattended delivery location, and places the ordered item. When the unattended delivery task is finished in this manner, the task executor goes out through the door D.

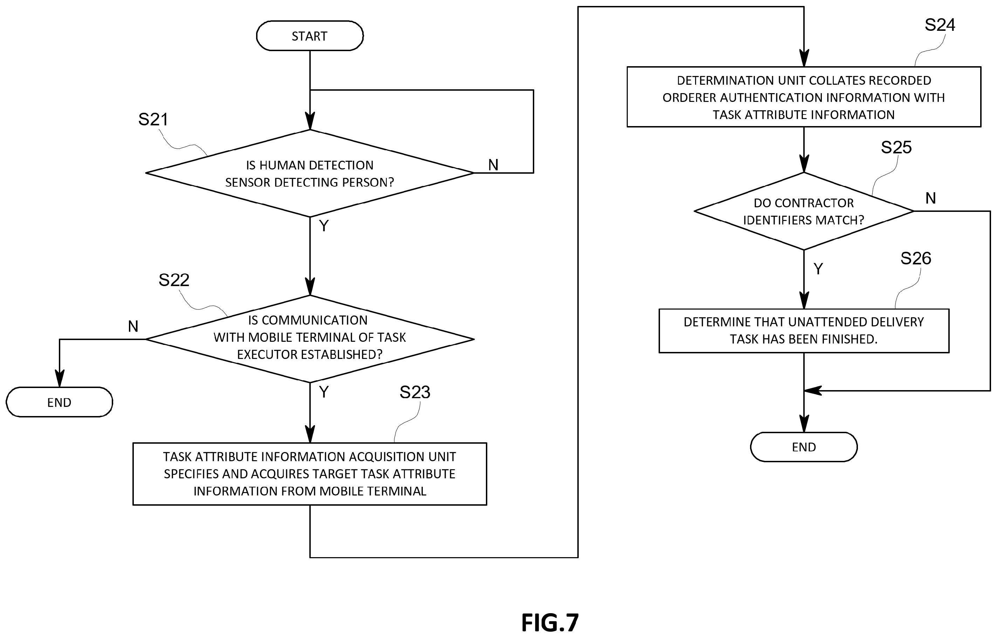

At this time, as illustrated in FIG. 7, the task attribute information acquisition unit acquires the task attribute information of a person detected by the human detection sensor 2 in the same manner as the task executor has entered, and on the basis of the acquired task attribute information, the determination unit determines whether the person detected is the task executor who has entered the apartment building for the unattended delivery (steps S21 to S25).

Then, in a case where the determination unit determines that the person detected is the task executor, the determination unit determines that the corresponding unattended delivery task has been finished, transmits the time and an identifier of the task executor in association with an ordered item identifier or the like, to the order receiver side terminal device and/or the orderer side terminal device, and invalidates the orderer authentication information related to the task (step S26). Accordingly, an orderer or an order receiver can know that the unattended delivery has been finished.

### [Second embodiment] one-time passcode

In the present embodiment, different authentication can be set for each task.

That is, when ordering an item, an orderer inputs a one-time passcode (orderer authentication information) appropriately set by the orderer as one piece of order data.

Similarly to the above, when receiving the order data from the orderer side terminal device 200, the order receiver side server device 300 associates the one-time passcode indicated in the order data with, for example, an ordered item identifier or a contractor identifier to be the orderer authentication information, transmits the orderer authentication information to the door sensor device 100, and associates the one-time passcode with the task target information such as, for example, an ordered item identifier to generate the task attribute information, and transmits the task attribute information to the order receiver side server device 300.

At the time of unattended delivery, collation of the orderer authentication information including the one-time passcode is performed between the door sensor device 100 and the mobile terminal 400 of the task executor, and the door D is opened only when they match.

In this way, since the orderer can set different authentication (one-time passcodes) for each task, security is further improved.

### [Third embodiment] stay time measurement of contractor

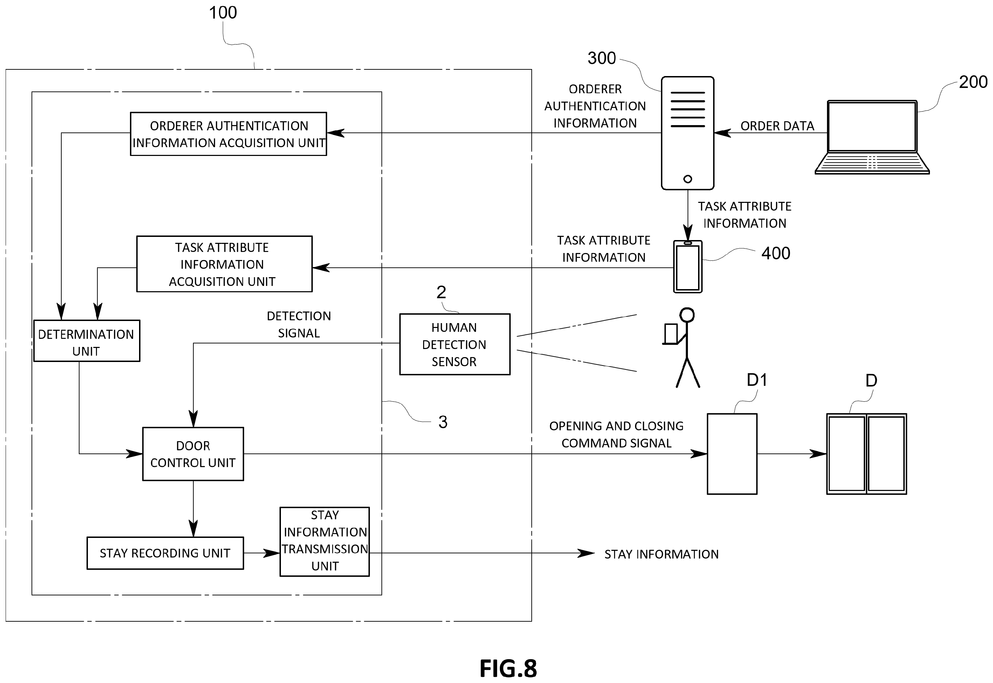

In the present embodiment, as illustrated in FIG. 8, the contractor management system further includes a stay recording unit that acquires and records a stay time from when an authenticated contractor enters the apartment building until the authenticated contractor leaves the apartment building, using a detection signal of the human detection sensor 2, and a stay information transmission unit that transmits stay information including the stay time of the contractor recorded by the stay recording unit, to the orderer side terminal device 200 and/or the order receiver side server device 300.

Specifically, the stay recording unit records, in a predetermined area of the memory, a timing when the determination unit determines that a contractor is authenticated by an orderer, and on the basis of the determination, the door control unit issues an instruction to open the door, as an entrance time at which the task executor has entered the apartment building.

Next, the stay recording unit detects an exit time at which the task executor has left the apartment building, and records the exit time in association with the entrance time. Note that the exit time of the task executor is, for example, a timing when, in a state where a human detection sensor 2' (illustrated in FIG. 1) that detects a person who leaves the inside and opens the door detects a person, the task related information acquisition unit determines that the person is the task executor.

At this time, the stay recording unit records, together with the entrance and exit times, an identifier of a task object, that is, an ordered item, in addition to an identifier of a subject that has performed a task, that is, the task executor or the contractor.

Then, the stay information transmission unit transmits the stay information including the stay time of the contractor to the orderer side terminal device 200 and/or the order receiver side server device 300 together with a part or all of the contractor attribute information.

According to such a configuration, since an orderer knows that an ordered item has arrived and the time of the arrival, it is possible to prevent the orderer from forgetting to pick up the ordered item.

In addition, it is also possible to caution an orderer and an order receiver about a case where a stay time of the task executor is longer than a predetermined time.

For an order receiver, an unattended delivery time of the task executor and a stay time required for the unattended delivery enable more detailed management of an unattended delivery task, and can be used for task improvement and commendation of the task executor who has performed efficient work.

Furthermore, the stay recording unit can specify a visiting sequence of a plurality of apartment buildings by one task executor, the time to reach the next apartment building, and the like. This can also be useful for task improvement and the like.

### [Fourth embodiment] recording of movement route of contractor in apartment building

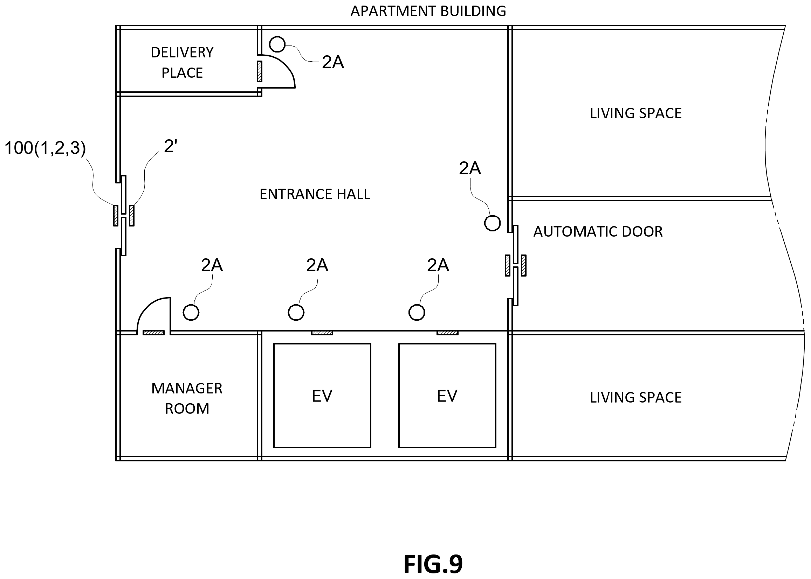

In the present embodiment, as illustrated in FIG. 9, in an apartment building having a plurality of doors inside the apartment building, a human detection sensor 2A (hereinafter, in order to distinguish from the human detection sensor provided on the door, referred to as a second human detection sensor 2A) is provided for each of one or more doors other than the entrance door, and the stay recording unit specifies a movement route of the task executor in the apartment building, on the basis of a time at which each of the second human detection sensors 2A detects the task executor.

Specifically, for example, the stay recording unit sequentially arranges times when the second human detection sensors 2A detect the person within a certain period of time starting from a time at which the entrance door is opened after the person is recognized as the task executor, thereby specifying the movement route of the task executor and storing the movement route in a predetermined area of the memory.

Then, the stay information transmission unit transmits stay information including the movement route to the orderer side terminal device and/or the order receiver side terminal device as in the third embodiment.

With such a configuration, as in the third embodiment, an orderer can grasp a behavior history of the task executor in an apartment building, and thus can obtain caution and a sense of security.

In addition, as in the third embodiment, it can be utilized for task improvement, commendation, and the like for an order receiver.

### [Fifth embodiment] presentation and the like of route to unattended delivery location in apartment building for contractor

A contractor management system in the present embodiment further includes a task execution information transmission unit (not illustrated) that transmits task execution information that is information for executing a task in an apartment building, to the contractor mobile terminal.

In an unattended delivery task, the task execution information is, for example, an in-building map indicating an unattended delivery location in the apartment building.

The task execution information transmission unit transmits the task execution information recorded in advance in a predetermined area of the memory (for example, an in-building map indicating an unattended delivery location) to the mobile terminal of the task executor at a timing when the determination unit determines that a person is the task executor, that is, at a timing when the task executor enters an entrance door of the apartment building.

With such a configuration, the task executor can execute the unattended delivery task without getting lost in the apartment building by viewing the in-building map.

The task execution information in the present embodiment is transmitted only to the mobile terminal of the person determined as the task executor by the determination unit via local communication. Therefore, leakage of information about the inside of the apartment building included in the task execution information can be prevented as much as possible, which can also contribute to improvement of security.

In addition, it is sufficient that the task execution information is stored in the door sensor device, and a cloud server or the like is unnecessary. Therefore, this point can also contribute to improvement of security, and for example, it is possible to easily cope with a change such as a change in an unattended delivery location in the apartment building.

The task execution information may be displayed on an indicator such as an indicator lamp or a display provided in the apartment building, or may be notified by voice via a voice device. In this way, since the task execution information is transmitted and received only in the apartment building, security is further improved.

### [Other embodiments] other tasks

In an apartment building, there is a case where ordered items of a plurality of different residents (orderer) are carried into the apartment building at the same time and unattended delivery is performed.

In this case, the task executor enters the apartment building with one orderer authentication information, and the other orderer authentication information "remains". This may cause a problem that unattended delivery of the other ordered items does not become a completion state.

In order to solve this problem, for example, a method is conceivable in which the task executor inputs, to the mobile terminal, that unattended delivery of the other ordered items has been completed by himself or herself. In addition, in order to eliminate the input work and the like of the task executor, for example, a method may be adopted in which a plurality of ordered items that can be collectively conveyed are grouped, and when orderer authentication information related to any one of the ordered items is used, it is automatically determined that orderer authentication information related to other ordered items is used.

In each of the embodiments described above, the unattended delivery task is taken as an example, but the present contractor management system is applicable not only to the unattended delivery task but also to various tasks performed in an apartment building, and various tasks related to boiler management, power distribution, elevator management, cleaning, and the like.

In such a case, an opening time and the number of times of opening of an entrance door may be changed for each task type.

Furthermore, the present invention is applicable to management of tasks performed not only in an apartment building but also in various facilities (particularly in buildings) provided with a security system.

For example, such facilities may include an unmanned store, a nursery school and a school, a hotel, a factory, a warehouse, a hospital, an office, a tenant building, and the like, and the present invention can be applied to management of other contractors such as contractors who enter such facilities and perform tasks.

The present invention is applicable not only to an automatic door but also to a door whose locking and unlocking can be controlled by a driving device.

### [Sixth embodiment]

In the contractor management system of each of the above embodiments, the information processing device of the door sensor device is configured to exert a function as the task attribute information acquisition unit, the orderer authentication information acquisition unit, and the determination unit, but the physical configuration of each unit is not limited thereto.

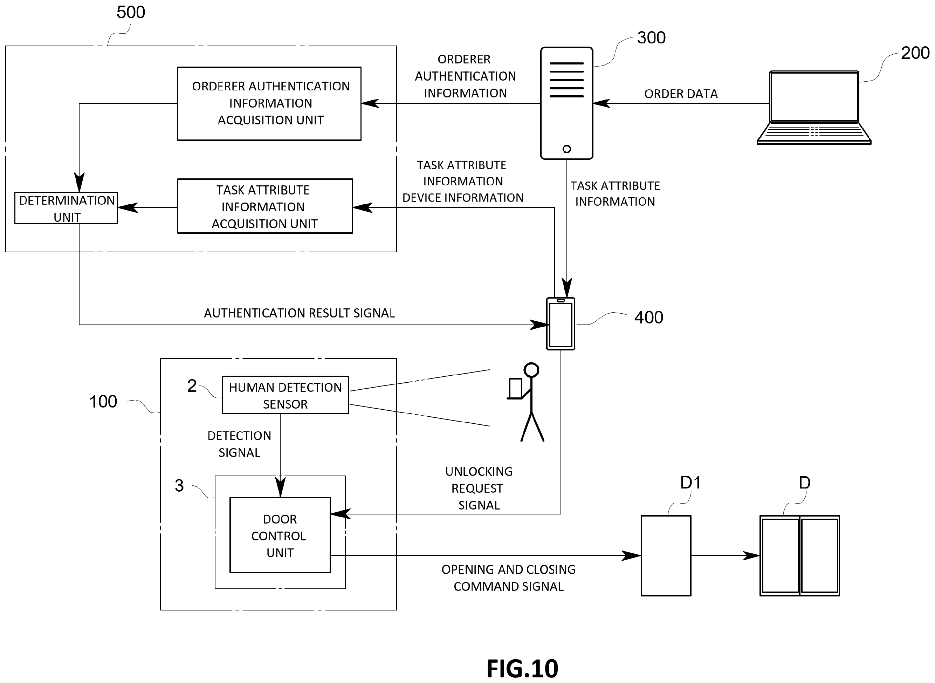

As illustrated in FIG. 10, a contractor management system of a sixth embodiment is configured by using the door sensor device 100 attached near the entrance door D of an apartment building and a contractor management server 500 used by, for example, a manager or the like of the apartment building. The contractor management server 500 exerts a function as the task attribute information acquisition unit, the orderer authentication information acquisition unit, and the determination unit described above.

The contractor management server 500 is a computer including a CPU, a memory, a communication interface, and the like, and exerts a function as the task attribute information acquisition unit, the orderer authentication information acquisition unit, and the determination unit by cooperation of the CPU and peripheral devices according to a predetermined program stored in the memory. The contractor management server 500 may be, for example, a virtualized computer provided in a cloud or the like. The contractor management server 500 is configured to be able to communicate with external devices such as the door sensor device 100 and the mobile terminal 400 via the communication network N or the like.

The task attribute information acquisition unit of the present embodiment communicates with the mobile terminal 400 held by a person detected by the human detection sensor 2 via, for example, the Internet line, and acquires the task attribute information recorded in advance in the mobile terminal 400 and device information of the door sensor device 100 that is detecting the person.

Specifically, when the detection sensor 2 detects a person, the door sensor device 100 transmits the device information to the mobile terminal 400 held by the detected person via local communication using, for example, Bluetooth. When receiving the device information, the mobile terminal 400 transmits the task attribute information and the device information to the task attribute information acquisition unit.

The device information is information for specifying an apartment building where the door sensor device 100 is installed, and is, for example, a product number unique to the device, a reference number assigned to the device after installation, a name or an address of the apartment building, or the like. This device information is recorded in a predetermined area of the memory of the information processing device 3 of the door sensor device 100.

The orderer authentication information acquisition unit of the present embodiment does not acquire the orderer authentication information in advance, and when the task attribute information acquisition unit acquires the device information, the orderer authentication information acquisition unit acquires the orderer authentication information necessary for specifying the task executor requested to perform a task in the apartment building specified on the basis of the device information.

Specifically, the orderer authentication information acquisition unit communicates with the order receiver side server device 300 via, for example, the Internet line to acquire the orderer authentication information. Note that the method for acquiring the orderer authentication information is not limited to the above example, and for example, the orderer authentication information may be acquired from a predetermined area of the memory recording the orderer authentication information received in advance from the order receiver side server device 300, or may be acquired by communicating with the orderer side terminal device 200 used for ordering by an orderer.

The determination unit compares the task attribute information acquired by the task attribute information acquisition unit from the person detected by the human detection sensor 2 with the orderer authentication information acquired by the orderer authentication acquisition unit, and determines whether or not the person detected by the human detection sensor 2 is a contractor authenticated by an orderer.

When the determination unit determines that the person detected by the human detection sensor 2 is the contractor authenticated by the orderer, the determination unit outputs an authentication result signal indicating the determination. The authentication result signal here is transmitted to the mobile terminal 400 via, for example, the Internet line.

Upon receiving the authentication result signal indicating successful authentication, the mobile terminal 400 transmits an unlocking request signal for requesting unlocking of the door to the door control unit via, for example, a local line.

The door control unit of the present embodiment outputs the door opening and closing command signal on the basis of the detection signal output from the human detection sensor 2 and the unlocking request signal. That is, the door control unit transmits the opening and closing command signal for opening the door to the opening and closing drive device (not illustrated) of the door when, in a state where the human detection sensor detects a person, the determination unit determines that the detected person is an authenticated contractor. The door control unit may output the door opening and closing command signal on the basis of the detection signal and the authentication result signal received from the determination unit through, for example, the Internet line.

According to the contractor management system of the sixth embodiment configured as described above, a processing function and a communication function of the door sensor device 100 can be simplified. In addition, it is possible to manage an unlocking state, an unlocking history, and the like of each door by the contractor management server 500, which can be utilized for improving security.

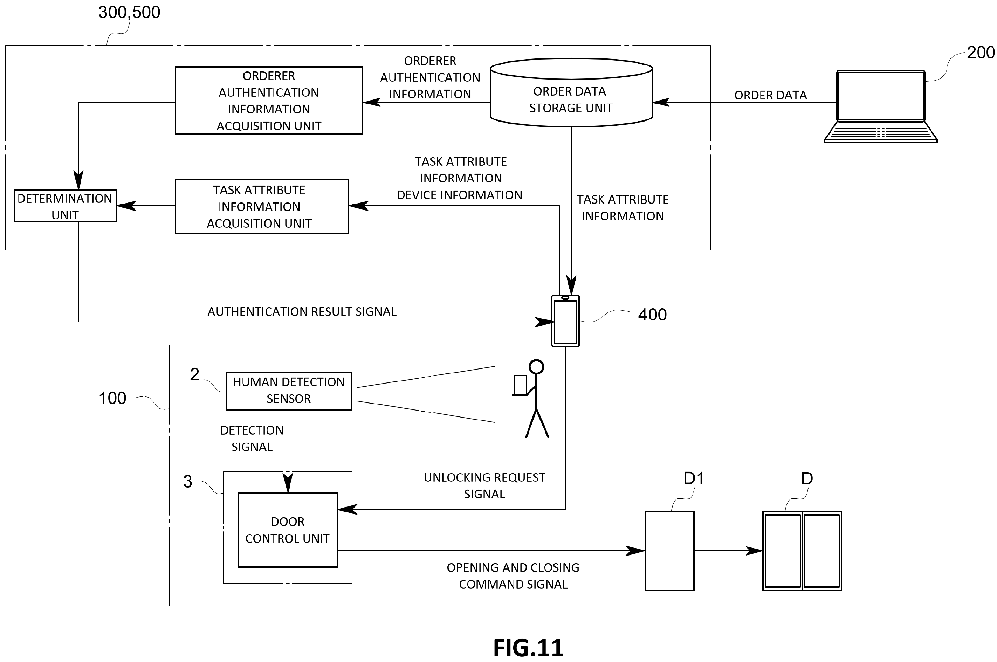

As illustrated in FIG. 11, the contractor management server 500 may be provided as the order receiver side server device 300 described above. In this case, for example, the orderer authentication information acquisition unit acquires the orderer authentication information recorded in advance in an order data storage unit set in a predetermined area of the memory of the order receiver side server device 300.

In addition, the mobile terminal 400 used by the task executor may be configured to exert a function as the task attribute information acquisition unit, the orderer authentication information acquisition unit, and the determination unit described above, or a function as the stay time recording unit or the task execution information transmission unit described above may be exerted by the contractor management server 500 or the mobile terminal 400.

### Industrial Applicability

According to the present invention, a task attribute information acquisition unit can acquire task attribute information of a person detected by a human detection sensor, that is, a person in a predetermined area of a door, by local communication with a mobile terminal of the person. Therefore, it is possible to reliably acquire information even in a place where a communication environment is poor as compared with communication via the Internet, and it is possible to establish a robust system in which information leakage hardly occurs. In addition, since a type and format of an attribute necessary for authentication can be easily changed by an application or the like of the mobile terminal, flexible operation is also possible.

### Reference Signs List

- 100: door sensor device
- 2: human detection sensor
- D: door

## Claims

1. A contractor management system for managing a contractor who has received, from an orderer, a request for a task in a facility provided with a security system, such as an apartment building, the contractor management system comprising:
a door sensor device including a human detection sensor that detects a person who has entered a predetermined area of a door of the facility, and a door control unit that controls locking and unlocking, or opening and closing of the door;
a task attribute information acquisition unit that acquires task attribute information indicating an attribute related to a task of the person detected by the human detection sensor;
an orderer authentication information acquisition unit that acquires orderer authentication information indicating task authentication to the contractor from the orderer; and
a determination unit that determines whether or not the person detected by the human detection sensor is an authenticated contractor by comparing the task attribute information and the orderer authentication information, wherein
when the determination unit determines that the person detected by the human detection sensor is the authenticated contractor, the door control unit causes the door to be an unlocked or opened state.

2. The contractor management system according to claim 1, wherein the task attribute information acquisition unit acquires the task attribute information of the person by communicating with a mobile terminal possessed by the person.

3. The contractor management system according to claim 1, wherein different authentication can be set for each task.

4. The contractor management system according to claim 1, further comprising a stay recording unit that uses a detection signal of the human detection sensor to acquire and record a stay time from when the authenticated contractor enters the facility until the authenticated contractor leaves the facility.

5. The contractor management system according to claim 4, wherein
the human detection sensor is provided at each of a plurality of places in the facility, and
the stay recording unit specifies and records a movement route of the contractor in the facility by a detection signal from each human detection sensor.

6. The contractor management system according to claim 4, further comprising a stay information transmission unit that transmits stay information of the contractor recorded by the stay recording unit to the orderer.

7. The contractor management system according to claim 1, further comprising a task execution information transmission unit that transmits, to the contractor, task execution information that is information for executing the task at the facility when the person is the authenticated contractor.

8. The contractor management system according to claim 1, wherein the task attribute information acquisition unit and the determination unit are attached to the door sensor device.
